(19) Europäisches Patentamt / European Patent Office / Office européen des brevets

(11) **EP 4 317 534 A1**

(12) **EUROPEAN PATENT APPLICATION**
published in accordance with Art. 153(4) EPC

(43) Date of publication:
**07.02.2024 Bulletin 2024/06**

(21) Application number: 22780832.6

(22) Date of filing: **28.03.2022**

(51) International Patent Classification (IPC):
*C25B 11/077* (2021.01)     *B22F 5/00* (2006.01)
*C25B 3/25* (2021.01)     *C25B 9/00* (2021.01)
*C25B 11/031* (2021.01)     *C25B 11/063* (2021.01)
*C25D 11/26* (2006.01)

(52) Cooperative Patent Classification (CPC):
**B22F 5/00; C25B 3/25; C25B 9/00; C25B 11/031;
C25B 11/063; C25B 11/077; C25D 11/26**

(86) International application number:
**PCT/JP2022/015226**

(87) International publication number:
**WO 2022/210621 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021   JP 2021059342**

(71) Applicant: **Mitsubishi Materials Corporation
Tokyo 100-8117 (JP)**

(72) Inventors:
• **SANO, Yosuke
Saitama-shi, Saitama 330-8508 (JP)**
• **OHMORI, Shinichi
Saitama-shi, Saitama 330-8508 (JP)**

(74) Representative: **Gille Hrabal
Partnerschaftsgesellschaft mbB
Patentanwälte
Brucknerstraße 20
40593 Düsseldorf (DE)**

(54) **TITANIUM BASE MATERIAL, WATER-ELECTROLYSIS ELECTRODE, AND SOLID MACROMOLECULE-TYPE WATER-ELECTROLYSIS DEVICE**

(57)   A titanium substrate material includes: a substrate main body made of a sintered titanium particle body; and a titanium oxide film formed on the substrate main body, wherein a proportion of anatase titanium oxide among titanium oxide constituting the titanium oxide film is 90% or more. It may have a porosity of the substrate main body is within a range of 30% or more and 92% or less. It may have a compressive strength of the titanium substrate is 0.5 MPa or more.

FIG. 1

**Description**

[Technical Field]

The present invention relates to a titanium substrate material suitable as a water electrolysis electrode for a water electrolysis device used when synthesizing alcohol from carboxylic acid, a water electrolysis electrode made of this titanium substrate material, and a solid polymer water electrolysis It is related to the device.

Priority is claimed on Japanese Patent Application No. 2021-059342, filed in Japan on March 31, 2021, the content of which is incorporated herein by reference.

[Background Art]

It has been a long time since renewable energy, including solar energy and wind energy, has attracted attention as an alternative to fossil energy in order to realize a $CO_2$-free society.

However, to further increase the use of renewable energy, there are many technical problems to be solved, such as: (1) establishing a method of transporting energy from energy supply areas, such as large solar and wind power generation facilities, to urban areas where energy is consumed; (2) establishing a method of circumventing problems related to excess electric power that cannot be fed into the power grid and electric power loss due to the time difference between peak periods of supply and demand, and the like.

As a way to solve these problems, a method is being considered to convert electrical energy obtained from surplus renewable energy into chemical energy (compounds) using a water electrolysis device and use it as fossil alternative energy.

Hydrogen and methylcyclohexane are well-known as the above-mentioned compounds, but in recent years alcohol, which is more stable and easier to store and transport, has attracted attention as a next-generation energy source.

An example of alcohol synthesis from renewable energy is one that applies a solid polymer water electrolysis device. This water electrolysis device is provided with a titanium electrode on which iridium oxide is supported as a catalyst on the anode, and a titanium electrode on which anatase titanium oxide is supported on the cathode as a catalyst. There is a reported case in which glycolic acid was successfully synthesized by reducing oxalic acid at the cathode using hydrogen generated by water electrolysis at the anode as a raw material (see Non-Patent Document 1). However, in the method of Non-Patent Document 1, the step of forming an anatase titanium oxide film on the surface of a porous titanium material is complicated, and it is not suitable for mass production.

Additionally, anodic oxidation in 0.1M or less sulfuric acid is known as a process for forming an anatase titanium oxide film on the surface of a bulk titanium substrate material. Specifically, by keeping the current density at 50 mA/cm$^2$ and applying up to the target voltage of 210 V, we succeeded in forming an anatase titanium oxide film on the surface of a plate-shaped titanium substrate material ( (See Non-Patent Document 2).

In general, it is preferable for electrodes used in liquid reactions to have a high porosity of 40% or more, and titanium fiber sintered bodies are widely used as the above-mentioned electrodes.

In addition, for the titanium substrate material that becomes the electrode, it is important to have high mechanical strength against compression so that the pore structure can be maintained when the electrode is incorporated into the electrolytic cell. A sintered body has been proposed (see Patent Document 1).

[Citation List]

[Patent Documents]

[Patent Document 1]
Japanese Patent Application Publication No. 2006-138005 (A)

[Non-Patent Document]

[Non-Patent Document 1]
M. Sadakiyo et. Al., Scientific Reports, 7(2017)17032
[Non-Patent Document 2]
N. Masahashi et. al., Appl. Cat. B, 90 (2009) 255-261

[Summary of Invention]

[Technical Problem]

However, in the titanium particle sintered body shown in Patent Document 1, the resistance at the sintered interface of the titanium particles is high due to the manufacturing method. Therefore, when a titanium particle sintered body is anodized at a high voltage exceeding 200 V, there is a problem that heat is generated at the high resistance particle sintered interface part, and the porous skeleton is burnt out.

Therefore, it was not possible to obtain a titanium substrate material in which a titanium oxide film made of anatase titanium oxide was formed on the surface of a titanium particle sintered body.

The present invention was made under the circumstances described above, and provides a titanium substrate material that can efficiently synthesize alcohol from carboxylic acid when used as an electrode for water electrolysis, an electrode for water electrolysis made of the titanium substrate material, and a solid polymer water electrolysis device.

[Solution to Problem]

In order to solve these problems and achieve the above object, an aspect of the present invention is configures as a titanium substrate material including: a substrate main body made of a sintered titanium particle body; and a titanium oxide film formed on the substrate main body, wherein a proportion of anatase titanium oxide among titanium oxide constituting the titanium oxide film is 90% or more.

According to the titanium substrate material having this configuration, a titanium oxide film is formed on the surface of the substrate main body made of sintered titanium particles; and the proportion of the anatase titanium oxide among the titanium oxide that constitutes the titanium oxide film is 90% or more. Thus, it can be used as an electrode for water electrolysis when synthesizing alcohol from carboxylic acid. Furthermore, since the substrate main body is made of sintered titanium particles, it has a high porosity and can promote reactions on the surface of the titanium substrate material.

In the above-described aspect of the present invention, a porosity of the substrate main body may be within a range of 30% or more and 92% or less.

In this case, since the porosity of the substrate main body made of sintered titanium particles is set to be 30% or more, fluid can be efficiently circulated inside the titanium substrate material, and the surface of the titanium substrate material reaction can be promoted.

On the other hand, since the porosity of the substrate main body made of sintered titanium particles is 92% or less , the strength of the substrate main body can be ensured.

In the above-described aspect of the present invention, a compressive strength of the titanium substrate may be 0.5 MPa or more.

In this case, the compressive strength is said to be 0.5 MPa or more, even if the substrate material is made of sintered titanium particles, it has sufficient strength and can be used stably as an electrode for water electrolysis.

In the above-described aspect of the present invention, a specific area of the titanium substrate material may 0.1 $m^2$/g or more.

In this case, since the specific surface area is set to 0.1 $m^2$/g or more, the surface area of the titanium oxide film having a catalytic action is large, and the reaction on the surface of the titanium substrate material can be further promoted.

In the above-described aspect of the present invention, an average thickness of the titanium oxide film may within a range of 0.05 $\mu$m or more and 1.0 $\mu$m or less.

In this case, since the average thickness of the titanium oxide film is 0.05 $\mu$m or more, the catalytic action of the anatase titanium oxide can be maintained for a long time. On the other hand, since the average thickness of the titanium oxide film is 1.0 $\mu$m or less, the electrical resistance is sufficiently low, and the conductivity of the entire titanium substrate material can be ensured.

Another aspect of the present invention is an electrode for water electrolysis, including the above-described titanium substrate material.

According to the electrode for water electrolysis having this configuration, the electrode is made of the titanium substrate material in which the titanium oxide film is formed on the surface of the substrate main body made of a sintered titanium particle body, and the proportion of anatase titanium oxide among titanium oxide constituting the titanium oxide film is 90% or more. Thus, it is possible to synthesize alcohol from carboxylic acid through the catalytic action of the titanium oxide film.

In addition, since the substrate main body is made of sintered titanium particles and has a porous structure, reactions on the electrode surface can be promoted.

Another aspect of the present invention is a solid polymer water electrolysis device including the above-described water electrolysis electrode.

According to the polymer electrolyte water electrolysis device having this configuration, it has the electrode for water electrolysis that is made of the titanium substrate material in which the titanium oxide film is formed on the surface of the substrate main body made of a sintered titanium particle body, and the proportion of anatase titanium oxide among titanium oxide constituting the titanium oxide film is 90% or more. Thus, it is possible to synthesize alcohol from carboxylic acid through the catalytic action of the titanium oxide film.

In addition, since the substrate main body is made of sintered titanium particles and has a porous structure, reactions on the electrode surface can be promoted.

[Advantageous Effects of Invention]

According to the present invention, a titanium substrate material capable of efficiently synthesizing alcohol from carboxylic acid when used as an electrode for water electrolysis, an electrode for water electrolysis made of this titanium substrate material, and a solid polymer water electrolysis device can be provided.

[Brief Description of Drawings]

FIG. 1 is an explanatory diagram showing an example of a titanium substrate material according to an embodiment of the present invention.
FIG. 2 is an enlarged schematic diagram of the surface layer portion of the titanium substrate material shown in FIG. 1.
FIG. 3 is a diagram showing the results of XRD analysis of a titanium oxide film on a titanium substrate material according to an embodiment of the present invention.
FIG. 4 is a flow diagram showing an example of a method for manufacturing a titanium substrate material according to an embodiment of the present invention.
FIG. 5 is a schematic explanatory diagram of a solid polymer water electrolysis device equipped with a water electrolysis electrode according to an embodiment of the present invention.

[Description of Embodiments]

The titanium substrate material, the electrode for water electrolysis, and the solid polymer water electrolysis device which are embodiment of the present invention are explained with reference to the attached drawings.

The titanium substrate material 10 of this embodiment is used, for example, as a cathode electrode of a solid polymer water electrolysis device that synthesizes alcohol from carboxylic acid.

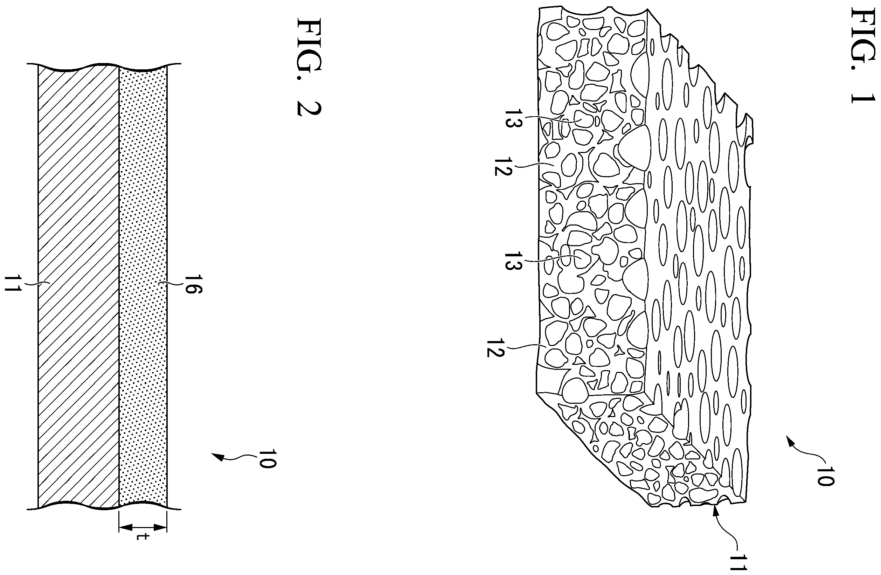

As shown in FIGS. 1 and 2, the titanium substrate material 10 of this embodiment includes a substrate main body 11 made of a titanium particle sintered body, and a titanium oxide film 16 formed on the surface of this substrate main body 11.

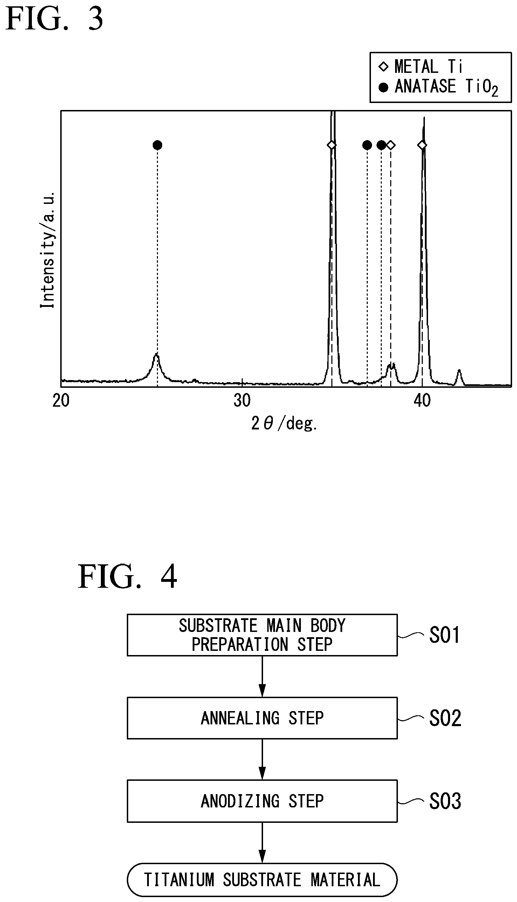

In this embodiment, as shown in FIG. 3, the proportion of anatase titanium oxide among the titanium oxide constituting the titanium oxide film 16 is 90% or more. This anatase titanium oxide acts as a catalyst when synthesizing alcohol by reducing carboxylic acid.

The proportion of anatase titanium oxide among the titanium oxide constituting the titanium oxide film 16 may be 91% or more, more preferably 92% or more.

In this embodiment, the substrate material main body 11 made of a titanium particle sintered body is a porous body as shown in FIG. 1. The substrate material main body includes a skeleton part 12 having a three-dimensional network structure and a pore part 13 surrounded by the skeleton part 12. The pores 13 surrounded by the skeleton 12 communicate with each other and are open toward the outside of the substrate material body 11.

The substrate material body 11 may have a porosity P of 30% or more and 92% or less. The porosity P of the substrate material main body 11 is calculated using the following formula.

$$P\ (\%) = (1 - (W/(V \times D_T))) \times 100$$

W: Mass (g) of the substrate main body 11
V: Volume of substrate material main body 11 ($cm^3$)
$D_T$: True density of titanium ($g/cm^3$)

By setting the porosity P of the substrate main body 11 made of a titanium particle sintered body to 30% or more, liquid, gas, etc. can be circulated well inside the titanium substrate material 10, and it becomes possible to accelerate the reaction. On the other hand, by setting the porosity P of the substrate material main body 11 made of a titanium particle sintered body to 92% or less, it becomes possible to ensure the strength of the titanium substrate material 10.

Here, in order to further promote the reaction in the titanium substrate material 10, the porosity P of the substrate main body 11 is more preferably 40% or more, and more preferably 50% or more. Furthermore, in order to further improve the strength of the titanium substrate material 10, the porosity P of the substrate main body 11 is more preferably 90% or less, and more preferably 88% or less.

Further, in this embodiment, it is preferable that the specific surface area of the titanium substrate material 10 is 0.1 m$^2$/g or more.

When the specific surface area of the titanium substrate material 10 is 0.1 m$^2$/g or more, the surface area of the titanium oxide film 16 formed on the surface of the substrate material main body 11 is large, and the catalytic action of the anatase titanium oxide is sufficiently enhanced. This makes it possible to further accelerate the reaction.

Here, in order to further enhance the catalytic action of the anatase titanium oxide, the specific surface area of the titanium substrate material 10 is more preferably 0.2 m$^2$/g or more, and more preferably 0.3 m$^2$/g or more. Although there is no particular restriction on the upper limit of the specific surface area of the titanium substrate material 10, it is preferably substantially 5.0 m$^2$/g or less.

Furthermore, in the present embodiment, it is preferable that the average thickness t of the titanium oxide film 16 is within the range of 0.05 $\mu$m or more and 1.0 $\mu$m or less.

When the average thickness t of the titanium oxide film 16 is 0.05 $\mu$m or more, the catalytic action of the anatase titanium oxide can be maintained for a long time. On the other hand, when the average thickness t of the titanium oxide film 16 is 1.0 $\mu$m or less, the electrical resistance becomes sufficiently low and the conductivity of the entire titanium substrate material 10 can be ensured.

In order to maintain the catalytic action of the anatase titanium oxide for a longer period of time, the average thickness t of the titanium oxide film 16 is more preferably 0.07 $\mu$m or more, and more preferably 0.1 $\mu$m or more. Furthermore, in order to further ensure the conductivity of the entire titanium substrate material 10, the average thickness t of the titanium oxide film 16 is more preferably 0.9 $\mu$m or less, and more preferably 0.8 $\mu$m or less.

Furthermore, in this embodiment, the compressive strength of the titanium substrate material 10 is preferably 0.5 MPa or more.

When the compressive strength of the titanium substrate material 10 is 0.5 MPa or more, the strength is sufficiently ensured, deformation and cracking during use can be suppressed, and the titanium substrate material 10 can be used stably as an electrode.

In order to further suppress the occurrence of deformation and cracking during use, the compressive strength of the titanium substrate material 10 is more preferably 0.7 MPa or more, and more preferably 0.9 MPa or more.

The method for manufacturing the titanium substrate material 10 according to this embodiment will be described below with reference to the flowchart in FIG. 4.

(Substrate material main body preparation step S01)

First, a titanium particle sintered body that will become the substrate main body 11 is prepared. This titanium particle sintered body can be manufactured, for example, by the following steps.

A slurry with formability is prepared by mixing a sintered raw material containing titanium with an organic binder, a foaming agent, a plasticizer, water, and, if necessary, a surfactant. This slurry with formability is applied using a doctor blade (coating device) to form a sheet-like molded body. This sheet-like molded body is heated and foamed to obtain a foamed molded product. This is then degreased and then sintered. As a result, a titanium particle sintered body is produced. (For example, see JP-A No. 2006-138005 and JP-A No. 2003-082405)

(Annealing step S02)

Next, the titanium particle sintered body obtained as described above is subjected to an annealing treatment. Specifically, the titanium particle sintered body described above was placed on a zirconia setter. Then, the annealing treatment is performed under the following conditions of: the vacuum degree of 1 Pa or less; the holding temperature of 1200°C or more and 1300°C or less; and the holding time of 0.5 hours or more and 3.0 hours or less.

The resistance of the particle sintering interface is lowered by performing the annealing step S02. Also, it make it possible to suppress heat generation at the particle sintering interface in the anodizing step S03 described later, and to improve the strength of the titanium substrate material 10.

(Anodizing step S03)

Next, the titanium oxide film 16 is formed by anodizing the annealed titanium particle sintered body (substrate body 11).

In this embodiment, the titanium oxide film 16 in which the proportion of anatase titanium oxide is 90% or more is formed by performing anodic oxidation in sulfuric acid with a sulfuric acid concentration of 0.2 M or less at a voltage of 200 V or less.

By the above-described manufacturing method, a titanium substrate material 10 is manufactured in which a titanium oxide film 16 in which the proportion of anatase titanium oxide is 90% or more is formed on the surface of the substrate main body 11 made of a sintered titanium particle body.

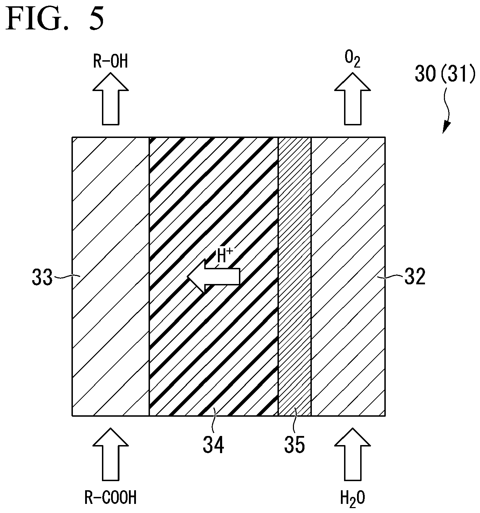

Next, a schematic diagram of the water electrolysis electrode and water electrolysis device according to this embodiment is shown in FIG. 5. The water electrolysis device of this embodiment is a solid polymer water electrolysis device.

As shown in FIG. 5, the polymer electrolyte water electrolysis device 30 of this embodiment includes a water electrolysis cell 31, which includes: an anode 32 and a cathode 33 arranged opposite to each other; and an ion permeable membrane 34 arranged between the anode 32 and the cathode 33. A catalyst layer 35 is formed on the surface of the ion-permeable membrane 34 that comes into contact with the anode electrode 32. As for the anode electrode 32, the ion permeable membrane 34, and the catalyst layer 35, those used in conventional general solid polymer type water electrolysis devices can be used.

The above-mentioned cathode electrode 33 is an electrode for water electrolysis according to this embodiment. This cathode electrode 33 (electrode for water electrolysis) is made of the titanium substrate material 10 according to the present embodiment described above. The cathode electrode 33 has a structure in which a titanium oxide film 16 is formed and the proportion of anatase titanium oxide on the surface of the substrate material body 11 made of sintered titanium particles was 90% or more.

In the solid polymer water electrolysis device 30 described above, as shown in FIG. 5, water ($H_2O$) is supplied from the anode 32 side, a carboxylic acid aqueous solution is supplied to the cathode side, and the anode 32 and the cathode electrode 33 are energized. Then, oxygen ($O_2$) produced by water electrolysis is discharged from the anode 32, and hydrogen ions produced at the anode pass through the ion exchange membrane 34 and move to the cathode. Using this hydrogen as a raw material, alcohol is synthesized by reducing carboxylic acid on the cathode 33 side. At this time, the titanium oxide film 16 formed on the surface of the cathode electrode 33 (90% or more of the titanium oxide is anatase titanium oxide) acts as a catalyst, promoting the reduction reaction of the carboxylic acid. The alcohol after reduction is discharged from the cathode 33.

According to the titanium substrate material 10 of this embodiment configured as above, the titanium oxide film 16 is formed on the surface of the substrate material main body 11 made of a titanium particle sintered body, and the titanium oxide film 16 is formed. It is said that anatase titanium oxide accounts for 90% or more of titanium oxide. Therefore, the titanium substrate material can be used as a water electrolysis electrode (cathode electrode) of a solid polymer water electrolysis device when synthesizing alcohol from carboxylic acid using a solid polymer water electrolysis device. Moreover, since the substrate material main body 11 is composed of a titanium particle sintered body, the porosity is high and the reduction reaction of carboxylic acid in the water electrolysis electrode (cathode electrode) can be promoted.

In this embodiment, when the porosity of the substrate material main body 11 is within the range of 30% or more and 92% or less, the reaction on the surface of the titanium substrate material 10 can be promoted. Moreover, the strength of the substrate material main body 11 can be ensured, and the titanium substrate material can be satisfactorily used as an electrode.

In this embodiment, when the compressive strength of the titanium substrate material 10 is 0.5 MPa or more, even if the substrate material main body 11 is composed of a porous titanium particle sintered body, the strength is sufficiently excellent. Also, the occurrence of deformation and cracking during use can be suppressed, and the cathode electrode 33 can be stably used.

In this embodiment, when the specific surface area of the titanium substrate material 10 is 0.1 $m^2$/g or more, the surface area of the titanium oxide film 16 having a catalytic action is large, and the surface area of the titanium substrate material 10 is large. Thus, the reaction on the electrode can be further accelerated.

In this embodiment, when the average thickness t of the titanium oxide film 16 is within the range of 0.05 $\mu$m or more and 1.00 $\mu$m or less, the catalytic action of the anatase titanium oxide can be maintained for a long time. Also, the electrical resistance can be made sufficiently low and the conductivity of the entire titanium substrate material 10 can be ensured. Therefore, it can be stably used as an electrode.

In the water electrolysis electrode (cathode 33) of this embodiment and the solid polymer water electrolysis device 30 of this embodiment equipped with this cathode 33, since they includes the cathode 33 made of above-described titanium substrate material 10, the catalytic action of the titanium oxide film 16 makes it possible to synthesize alcohol from carboxylic acid. Moreover, since the substrate material main body 11 is made of a titanium particle sintered body and has a porous structure, the reaction on the surface of the cathode electrode 33 can be promoted.

Although the embodiments of the present invention have been described above, the present invention is not limited thereto and can be modified as appropriate without departing from the technical idea of the invention.

For example, in this embodiment, a polymer electrolyte water electrolysis device (water electrolysis cell) having the structure shown in FIG. 5 has been described as an example. However, the present invention is not limited thereto, and can be applied to water electrolysis devices (water electrolysis cells) having other structures as long as they are equipped with the water electrolysis electrode made of the titanium substrate material of this embodiment.

EXAMPLES

The results of a confirmation experiment conducted to confirm the effects of the present invention will be explained below.

First, the substrate material bodies shown in Table 1 were prepared. The dimensions of the prepared substrate material body were 25 mm in width × 25 mm in length, and the average film thickness was as shown in Table 1. Inventive Examples 1-6 and Comparative Examples 1 and 2 used titanium particle sintered bodies, and Comparative Example 3 used titanium fiber sintered bodies. Here, the pore diameter and porosity of the substrate material body were measured as follows. The titanium fiber sintered body is a member made of titanium fibers (diameter 20 $\mu$m or more and 50 $\mu$m or less) as a raw material and made porous through a sintering process.

(Pore diameter)

Various titanium parts were photographed using the optical camera LEICA DMS300 manufactured by Leica. The taken images were binarized using the image analysis software Win ROOF manufactured by Mitani Shoji Co., Ltd. for the electrode skeleton portion and the pore portion, and the pore diameter was calculated.

(Porosity)

The porosity was calculated using the following formula,

$$P\,(\%) = (1\text{-}(W/(V{\times}D_T))){\times}100$$

W: Mass (g)
V: Volume (cm$^3$)
$D_T$: True density of titanium (g/cm$^3$)

The volume V of the substrate material body 11 was calculated using the thickness of the substrate material body 11 measured with a digital micrometer and the vertical and horizontal lengths measured with a digital caliper. The mass of the substrate material main body 11 was measured using an electronic balance.

Next, in Inventive Examples 1-6 and Comparative Example 1, annealing treatment was performed at a vacuum degree of 1 Pa or less, a holding temperature of 1250°C, and a holding time of 10 hours. In Comparative Examples 2 and 3, annealing treatment was not performed.

Next, the surface of the substrate material body was anodized using the method and conditions shown in Table 1 to form a titanium oxide film.

As described above, a titanium substrate material with a titanium oxide film formed on the surface of the substrate material body was obtained. Regarding the obtained titanium substrate material, the identification of the titanium oxide film, compressive strength, and specific surface area were evaluated as follows.

(Identification of titanium oxide in titanium oxide film)

Using Rigaku's fully automatic multi-purpose X-ray diffraction device (product name: SmartLab), the titanium oxide in the titanium oxide film was identified by X-ray diffraction analysis (XRD), and the proportion of anatase titanium oxide (Ra) was determined; and the proportion of rutile titanium oxide (Rr) was evaluated. A Cu tube (CuK$\alpha$ ray) was used as the X-ray source, and the measurement angle range was 15-90°. In calculating the above-mentioned proportion, the following formula was used, where the peak intensity at 25.3° of anatase titanium oxide is Ia, and the peak intensity at 27.4° of rutile titanium oxide is Ir.

$$Ra=Ia/(Ia+Ir)$$

$$Rr=Ir/(Ia+Ir)$$

Ia: Total number of detected X-rays in the range of 24.3-26.3° after removing the background
Ir: Total number of detected X-rays in the range of 26.4-28.4° after removing the background

(Average thickness of titanium oxide film)

The samples after film formation were embedded in resin and cut in a direction perpendicular to the thickness direction of the titanium oxide film to expose the cross section. This cross section was observed with a SEM, and five points were taken evenly from end to end of the titanium oxide film layer in the SEM image observed at a magnification of 20,000 times, and the average film thickness was calculated for each. Then, the average thickness of the titanium oxide film was determined from the average value of the five measured points.
The evaluation results are shown in Table 1.

(Compressive strength)

A compression test was conducted to evaluate the compressive strength. The evaluation results are shown in Table 1.

(Specific surface area of substrate material body)

The sample after film formation was cut into square pieces of 2 mm $\times$ 2 mm or less, and about 0.3 g was filled into a sample holder. The sample folder was placed in AUTOSORB-iQ2 manufactured by QUANTACHROME, and degassed at a temperature of 200°C for 60 minutes. Then, krypton gas was introduced and the specific surface area was measured. The evaluation results are shown in Table 1.

[Table 1]

| | | Substrate material main body | | | | Anode oxidation | | | Titanium oxide film | | | Titanium substrate material | |
|---|---|---|---|---|---|---|---|---|---|---|---|---|---|
| | | Structure | Thickness (mm) | Pore diameter ($\mu$m) | Porosity (%) | Sulfuric acid concentration (M) | Achieved voltage (V) | Treatment time (min) | Proportion of anatase titanium | Proportion of rutile titanium | Average film thickness ($\mu$m) | Compressive strength (MPa) | Specific surface area ($m^2$/g) |
| Invention Example | 1 | Titanium particle sintered body | 0.5 | 50 | 80 | 0.10 | 170 | 60 | 96% | 4% | 0.5 | 11.0 | 0.6 |
| | 2 | Titanium particle sintered body | 0.5 | 50 | 60 | 0.20 | 170 | 60 | 90% | 10% | 0.5 | more than 20 | 0.6 |
| | 3 | Titanium particle sintered body | 1.0 | 600 | 92 | 0.01 | 130 | 20 | 98% | 2% | 0.05 | 1.4 | 0.1 |
| | 4 | Titanium particle sintered body | 50.0 | 600 | 70 | 0.10 | 170 | 60 | 96% | 4% | 0.5 | more than 20 | 0.6 |
| | 5 | Titanium particle sintered body | 20.0 | 1000 | 80 | 0.10 | 190 | 80 | 94% | 6% | 1.0 | 13.0 | 1.0 |
| | 6 | Titanium particle sintered body | 0.2 | 50 | 40 | 0.10 | 170 | 60 | 96% | 4% | 0.5 | more than 20 | 0.6 |

(continued)

| | | Substrate material main body | | | | Anode oxidation | | | Titanium oxide film | | | Titanium substrate material | |
|---|---|---|---|---|---|---|---|---|---|---|---|---|---|
| | | Structure | Thickness (mm) | Pore diameter (μm) | Porosity (%) | Sulfuric acid concentration (M) | Achieved voltage (V) | Treatment time (min) | Proportion of anatase titanium | Proportion of rutile titanium | Average film thickness (μm) | Compressive strength (MPa) | Specific surface area (m²/g) |
| Comparative Example | 1 | Titanium particle sintered body | 0.5 | 50 | 80 | 0.40 | 190 | 80 | 70% | 30% | 1.0 | 11.0 | 1.0 |
| | 2 | Titanium particle sintered body | 0.5 | 50 | 80 | 0.10 | 130 | 20 | - | - | - | - | - |
| | 3 | Titanium particle sintered body | 0.2 | 50 | 80 | 0.10 | 170 | 60 | 96% | 4% | 0.5 | less than 0.1 | 0.6 |

In Comparative Example 1, anodization was performed in sulfuric acid with a sulfuric acid concentration of 0.4M. In the titanium oxide film formed, the proportion of anatase titanium oxide was less than 90%. For this reason, the titanium oxide film could not be used as a catalyst for the reduction reaction of carboxylic acid.

In Comparative Example 2, the substrate material body made of sintered titanium particles was not annealed, but anodized in sulfuric acid with a sulfuric acid concentration of 0.1M. Due to cracks occurring in the substrate material during anodization, subsequent evaluation was discontinued. It is presumed that this is because heat was generated at the high-resistance sintered interface of the particles during anodic oxidation, and the porous skeleton was burnt out.

In Comparative Example 3, the substrate material body made of the titanium fiber sintered body was not annealed, but anodized at a sulfuric acid concentration of 0.1M. The compressive strength was 0.1 MPa or less, which was the lower limit of measurement, and the strength was insufficient.

On the other hand, in Invention Examples 1-6, the substrate material body made of sintered titanium particles was annealed and anodized in sulfuric acid with a sulfuric acid concentration of 0.2M or less. In the formed titanium oxide film, the proportion of anatase titanium oxide was 90% or more, and it was possible to use it as a catalyst for the reduction reaction of carboxylic acid. Moreover, the compressive strength was sufficiently high and the specific surface was large, so that it could be stably used as an electrode.

From the results of the above confirmation experiments, it was confirmed that according to the examples of the present invention, it is possible to provide a titanium substrate material that enables alcohol synthesis from carboxylic acid when used as an electrode for water electrolysis.

[Industrial applicability]

Provided is a titanium substrate material capable of efficiently synthesizing alcohol from carboxylic acid when used as an electrode for water electrolysis, and an electrode for water electrolysis and a solid polymer type water electrolysis device made of the titanium substrate material.

[Reference Signs List]

10: Titanium substrate material
11: Substrate main body
16: Titanium oxide film
30: Solid polymer water electrolysis device
33: Cathode electrode (electrode for water electrolysis)

**Claims**

1. A titanium substrate material comprising:

   a substrate main body made of a sintered titanium particle body; and
   a titanium oxide film formed on the substrate main body, wherein
   a proportion of anatase titanium oxide among titanium oxide constituting the titanium oxide film is 90% or more.

2. The titanium substrate material according to claim 1, wherein a porosity of the substrate main body is within a range of 30% or more and 92% or less.

3. The titanium substrate material according to claim 1 or 2, wherein a compressive strength of the titanium substrate is 0.5 MPa or more.

4. The titanium substrate material according to any one of claims 1 to 3, wherein a specific area of the titanium substrate material is 0.1 m$^2$/g or more.

5. The titanium substrate material according to any one of claims 1 to 4, wherein an average thickness of the titanium oxide film is within a range of 0.05 $\mu$m or more and 1.0 $\mu$m or less.

6. An electrode for water electrolysis, comprising the titanium substrate material according to any one of claims 1 to 5.

7. A solid polymer water electrolysis device comprising the water electrolysis electrode according to claim 6.

FIG. 1

FIG. 2

# FIG. 3

# FIG. 4

FIG. 5

R-OH          $O_2$      30 (31)

$H^+$

33                      32

34    35

R-COOH          $H_2O$

## INTERNATIONAL SEARCH REPORT

| International application No. |
| --- |
| **PCT/JP2022/015226** |

### A. CLASSIFICATION OF SUBJECT MATTER

*C25B 11/077*(2021.01)i; *B22F 5/00*(2006.01)i; *C25B 3/25*(2021.01)i; *C25B 9/00*(2021.01)i; *C25B 11/031*(2021.01)i; *C25B 11/063*(2021.01)i; *C25D 11/26*(2006.01)i
FI: C25B11/077; B22F5/00 J; C25B3/25; C25B9/00 A; C25B11/031; C25B11/063; C25D11/26 302

According to International Patent Classification (IPC) or to both national classification and IPC

### B. FIELDS SEARCHED

Minimum documentation searched (classification system followed by classification symbols)

C25B1/00-15/08,B22F1/00-12/90,B01J21/00-38/74

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JDreamIII

### C. DOCUMENTS CONSIDERED TO BE RELEVANT

| Category* | Citation of document, with indication, where appropriate, of the relevant passages | Relevant to claim No. |
| --- | --- | --- |
| X | JP 2009-215621 A (TOHOKU UNIV) 24 September 2009 (2009-09-24) claim 11, paragraphs [0016]-[0021], [0028], [0040] | 1, 5 |
| Y | | 2-4, 6-7 |
| Y | WO 2006/051939 A1 (MITSUBISHI MATERIALS CORPORATION) 18 May 2006 (2006-05-18) paragraphs [0001], [0011]-[0013], table 2 | 2-4, 6-7 |
| X | US 2017/0021416 A1 (CELLMOTIVE CO. LTD.) 26 January 2017 (2017-01-26) claims 1-5, paragraphs [0041], [0057]-[0060], fig. 4-5 | 1, 4-5 |
| Y | | 2 |
| A | | 3, 6--7 |
| Y | JP 2020-526893 A (LG CHEMICAL LTD) 31 August 2020 (2020-08-31) paragraph [0038] | 2 |
| A | US 2015/0068906 A1 (KERONITE INTERNATIONAL LIMITED) 12 March 2015 (2015-03-12) | 1-7 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 June 2022** | **14 June 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2022/015226**

### C. DOCUMENTS CONSIDERED TO BE RELEVANT

| Category* | Citation of document, with indication, where appropriate, of the relevant passages | Relevant to claim No. |
|---|---|---|
| A | 阿相英孝　ほか, チタン多孔質電極のアノード酸化挙動, 電気化学会講演要旨集第73回大会 , 社団法人電気化学会, 01 April 2006, p.79<br>entire text, (ASO, Hidetaka et al.), non-official translation (Anode oxidation behavior of titanium porous electrodes. Lecture abstracts of the 73rd ECSJ Spring Meeting. The Electrochemical Society of Japan.) | 1-7 |

Form PCT/ISA/210 (second sheet) (January 2015)

## INTERNATIONAL SEARCH REPORT
### Information on patent family members

International application No.

**PCT/JP2022/015226**

| Patent document cited in search report | | | Publication date (day/month/year) | Patent family member(s) | | Publication date (day/month/year) |
|---|---|---|---|---|---|---|
| JP | 2009-215621 | A | 24 September 2009 | (Family: none) | | |
| WO | 2006/051939 | A1 | 18 May 2006 | US 2008/0090719 A1 paragraphs [0002], [0014]-[0016], table 2 | | |
| | | | | EP 1813688 A1 | | |
| | | | | CN 101052733 A | | |
| US | 2017/0021416 | A1 | 26 January 2017 | US 2019/0344345 A1 | | |
| | | | | US 2017/0025683 A1 | | |
| | | | | US 2021/0178471 A1 | | |
| | | | | WO 2017/015405 A1 | | |
| | | | | WO 2017/015407 A1 | | |
| | | | | CN 108140813 A | | |
| | | | | CN 108140801 A | | |
| JP | 2020-526893 | A | 31 August 2020 | US 2021/0336274 A1 paragraph [0043] | | |
| | | | | WO 2019/045399 A1 | | |
| | | | | EP 3633768 A1 | | |
| | | | | KR 10-2019-0024761 A | | |
| | | | | CN 110754009 A | | |
| US | 2015/0068906 | A1 | 12 March 2015 | GB 201218832 D | | |
| | | | | GB 2505025 A | | |
| | | | | GB 201205742 D0 | | |
| | | | | WO 2013/144660 A2 | | |
| | | | | EP 2830757 A1 | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021059342 A
- JP 2006138005 A

- JP 2003082405 A

**Non-patent literature cited in the description**

- **M. SADAKIYO.** *Scientific Reports,* 2017, vol. 7, 17032

- **N. MASAHASHI.** *Appl. Cat. B,* 2009, vol. 90, 255-261